(19) Europäisches Patentamt
European Patent Office
Office européen des brevets

(11) EP 4 573 906 A1

(12) **EUROPEAN PATENT APPLICATION**

(43) Date of publication:
**25.06.2025 Bulletin 2025/26**

(21) Application number: **24221569.7**

(22) Date of filing: **19.12.2024**

(51) International Patent Classification (IPC):
***A01N 55/08*** *(2006.01)* ***A01N 57/12*** *(2006.01)*
***A01N 59/16*** *(2006.01)* ***E04H 9/16*** *(2006.01)*

(52) Cooperative Patent Classification (CPC):
(C-Sets available)
**A01N 59/16; A01N 55/08; A01N 57/12; C09D 7/61; C09D 7/63; E04H 9/16;** C09D 5/14 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.12.2023 US 202363611823 P**

(71) Applicant: **Armstrong World Industries, Inc.**
**Lancaster, PA 17604-3001 (US)**

(72) Inventors:
- **HUGHES, John E.**
  **Lincoln University (US)**
- **EDNER, Tiffany**
  **Lancaster (US)**

(74) Representative: **Studio Torta S.p.A.**
**Via Viotti, 9**
**10121 Torino (IT)**

(54) **ANTIMICROBIAL BUILDING PANELS**

(57) Described herein is a building panel comprising a fibrous substrate; and a coating applied to the substrate, the coating comprising a blend of: an antimicrobial composition, a binder, and a pigment, wherein the antimicrobial composition comprises a boro-phosphate ester zinc compound.

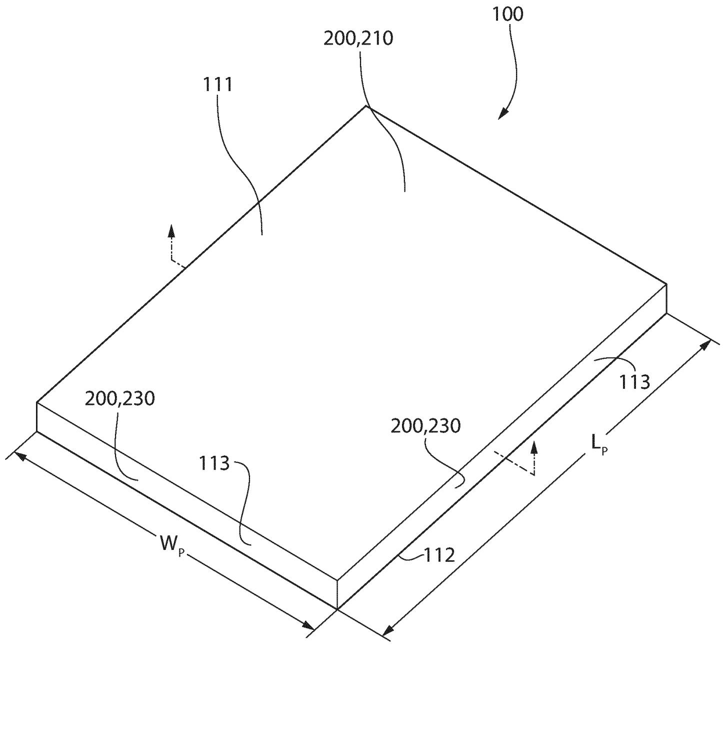


FIG. 1



Processed by Luminess, 75001 PARIS (FR)

(Cont. next page)

(52) Cooperative Patent Classification (CPC): (Cont.)

C-Sets
**A01N 55/08, A01N 25/08, A01N 25/34;**
**A01N 57/12, A01N 55/08, A01N 25/08,**
**A01N 25/34;**
**A01N 59/16, A01N 57/12, A01N 55/08,**
**A01N 25/08, A01N 25/34**

## Description

## CROSS-REFERENCE TO RELATED APPLICATION

This application claims the benefit of U.S. Provisional Application No. 63/611823 filed on December 19, 2023. The disclosure of the above application is incorporated herein by reference.

## BACKGROUND OF THE INVENTION

The presence of bacteria and/or fungus on surfaces is a major concern today affecting home, work, and recreational environments. Exposure to certain bacteria and/or fungi (or their spores) can seriously impact the health of humans, pets and other animals. Previous attempts at imparting protective properties to a building panel included applying an antibacterial and/or antifungal coating to a surface of a building material. However, such previous coatings required relatively large amounts of certain anti-microbial agents that may have limited availability. Thus, the need exists for a coating that can exhibit adequate protective performance using alternative agents.

## BRIEF SUMMARY OF THE INVENTION

The present invention may be directed to a building panel comprising: a fibrous substrate; and a coating applied to the substrate, the coating comprising a blend of: an antimicrobial composition; a binder; and a pigment; wherein the antimicrobial composition comprises a boro-phosphate ester zinc compound.

Other embodiments of the present invention may include a building system comprising: a support surface; and at least one of the aforementioned building panels, wherein the building panel is supported by the support surface.

Other embodiments of the present invention include a coating composition comprising: a liquid carrier; an antimicrobial composition; a binder; and a pigment; wherein the antimicrobial composition comprises a boro-phosphate ester zinc compound.

Other embodiments of the present invention include a method of coating a substrate comprising: a) applying the coating composition according to anyone of claims 14 to 20 to a fibrous substrate; b) drying the coating composition such that the liquid carrier is removed from the substrate.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

## BRIEF DESCRIPTION OF THE DRAWINGS

The present invention will become more fully understood from the detailed description and the accompanying drawings, wherein:

FIG. 1 is top perspective view of a coated building panel according to the present invention;

FIG. 2 is a cross-sectional view of the coated building panel according to the present invention, the cross-sectional view being along the II line set forth in Figure 1; and

FIG. 3 is a ceiling system comprising the coated building panel of the present invention.

## DETAILED DESCRIPTION OF THE INVENTION

The following description of the preferred embodiment(s) is merely exemplary in nature and is in no way intended to limit the invention, its application, or uses.

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

Unless otherwise specified, all percentages and amounts expressed herein and elsewhere in the specification should be understood to refer to percentages by weight. The amounts given are based on the active weight of the material.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such

as "lower," "upper," "horizontal," "vertical," "above," "below," "up," "down," "top," and "bottom" as well as derivatives thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such.

Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

Unless otherwise specified, all percentages and amounts expressed herein and elsewhere in the specification should be understood to refer to percentages by weight. The amounts given are based on the active weight of the material. According to the present application, the term "about" means +/- 5% of the reference value. According to the present application, the term "substantially free" less than about 0.1 wt. % based on the total of the referenced value.

The present invention is directed to a protective coating (also referred to as the "coating" or "antimicrobial coating") that exhibits antimicrobial activity. According to the present invention, a microbe may refer to a fungi source (e.g., mildew, mold), bacteria or bacterial growth. According to the present invention, the term "antimicrobial activity" refers to a reduction in activity of a bacteria source or growth, and/or a fungi source or growth. Accordingly, the term antimicrobial activity may refer to "antibacterial" and/or "antifungal" activity.

As described in greater detail herein, the protective coating may be applied such that the protective coating forms a portion of a coated building panel. The building panel may form part of a building system, whereby the building panel forms a ceiling panel or a wall panel.

Referring to FIGS. 1-3, the present invention includes the coated building panel 100 (referred to herein as "building panel") comprising a first major surface 111 opposite a second major surface 112 and a side surface 113 that extends between the first major surface 111 and the second major surface 112, thereby defining a perimeter of the ceiling panel 100.

Referring to FIG. 3, the present invention may further include a ceiling system 1 comprising one or more of the building panels 100 installed in an interior space, whereby the interior space comprises a plenum space 3 and an active room environment 2. The plenum space 3 provides space for mechanical lines within a building (e.g., HVAC, plumbing, etc.). The active space 2 provides room for the building occupants during normal intended use of the building (e.g., in an office building, the active space would be occupied by offices containing computers, lamps, etc.).

In the installed state, the building panels 100 may be supported in the interior space by one or more parallel support struts 5. Each of the support struts 5 may comprise an inverted T-bar having a horizontal flange 31 and a vertical web 32. The ceiling system 1 may further comprise a plurality of first struts that are substantially parallel to each other and a plurality of second struts that are substantially perpendicular to the first struts (not pictured). In some embodiments, the plurality of second struts intersects the plurality of first struts to create an intersecting ceiling support grid 6. The plenum space 3 exists above the ceiling support grid 6 and the active room environment 2 exists below the ceiling support grid 6.

In the installed state, the first major surface 111 of the building panel 100 may face the active room environment 2 and the second major surface 112 of the building panel 100 may face the plenum space 3. The building panel 100 may be installed such that the horizontal flange 31 contacts the first major surface 111 of the building panel 100, thereby vertically supporting the building panel 100 in the ceiling system 1.

Referring now to FIGS. 1 and 2, the building panel 100 of the present invention may have a panel thickness $t_0$ as measured from the first major surface 111 to the second major surface 112. The panel thickness $t_0$ may range from about 12 mm to about 40 mm - including all values and sub-ranges there-between. The building panel 100 may have a length $L_P$ ranging from about 30 cm to about 310 cm - including all values and sub-ranges there-between. The building panel 100 may have a width $W_P$ ranging from about 10 cm to about 125 cm - including all values and sub-ranges there-between.

The building panel 100 may comprise a body 120 and the protective coating 200 applied thereto - as discussed further herein. The body 120 comprises an upper surface 121 opposite a lower surface 122 and a body side surface 123 that extends between the upper surface 121 and the lower surface 122, thereby defining a perimeter of the body 120. The body 120 may have a body thickness $t_1$ that extends from the upper surface 121 to the lower surface 122. The body thickness $t_1$ may range from about 12 mm to about 40 mm - including all values and sub-ranges there-between.

The body 120 may be porous, thereby allowing airflow through the body 120 between the upper surface 121 and the lower surface 122 - as discussed further herein. The body 120 may be comprised of a binder and fibers. In some embodiments, the body 120 may further comprise a filler and/or additive.

Non-limiting examples of binder may include a starch-based polymer, polyvinyl alcohol (PVOH), a latex, polysaccharide polymers, cellulosic polymers, protein solution polymers an acrylic polymer, polymaleic anhydride, epoxy resins, or a combination of two or more thereof. Non-limiting examples of filler may include powders of calcium carbonate,

limestone, titanium dioxide, sand, barium sulfate, clay, mica, dolomite, silica, talc, perlite, polymers, gypsum, wollastonite, expanded-perlite, calcite, aluminum trihydrate, pigments, zinc oxide, or zinc sulfate.

The fibers may be organic fibers, inorganic fibers, or a blend thereof. Non-limiting examples of inorganic fibers mineral wool (also referred to as slag wool), rock wool, stone wool, and glass fibers. Non-limiting examples of organic fiber include fiberglass, cellulosic fibers (e.g. paper fiber - such as newspaper, hemp fiber, jute fiber, flax fiber, wood fiber, or other natural fibers), polymer fibers (including polyester, polyethylene, aramid - i.e., aromatic polyamide, and/or polypropylene), protein fibers (e.g., sheep wool), and combinations thereof.

The body 120 may be porous, thereby allowing airflow through the body 120 between the upper surface 121 and the lower surface 122 of the panel body 120. According to the present invention, the term porous refers to the body 120 being porous enough to allow for enough airflow through the body 120 under atmospheric conditions for the body 120 and the resulting building panel 100 to function as an acoustic building panel 100 and corresponding ceiling system 1 or wall system (not pictured) to function as an acoustical ceiling system or acoustical wall system, which requires properties related to noise reduction and sound attenuation properties - as discussed further herein.

Specifically, the body 120 of the present invention may have a porosity ranging from about 60% to about 98% - including all values and sub-ranges there between. In a preferred embodiment, the body 120 has a porosity ranging from about 75% to 95% - including all values and sub-ranges there between.

According to the embodiments where the body 120 is formed from binder and fibers, porosity may be calculated by the following:

$$\%\ \text{Porosity} = [V_{Total} - (V_{Binder} + V_F + V_{Filler})] \,/\, V_{Total}$$

Where $V_{Total}$ refers to the total volume of the body 120 defined by the upper surface 121 the lower surface, and the body side surfaces 123 of the body 120. $V_{Binder}$ refers to the total volume occupied by the binder in the body 120. $V_F$ refers to the total volume occupied by the fibers in the body 120. $V_{Filler}$ refers to the total volume occupied by the filler in the body 120. Thus, the % porosity represents the amount of free volume within the body 120.

The body 120 of the present invention may exhibit sufficient airflow for the body 120 to have the ability to reduce the amount of reflected sound in an active room environment 2. The reduction in amount of reflected sound in an active room environment 2 is expressed by a Noise Reduction Coefficient (NRC) rating as described in American Society for Testing and Materials (ASTM) test method C423. This rating is the average of sound absorption coefficients at four ⅓ octave bands (250, 500, 1000, and 2000 Hz), where, for example, a system having an NRC of 0.90 has about 90% of the absorbing ability of an ideal absorber. A higher NRC value indicates that the material provides better sound absorption and reduced sound reflection.

The body 120 of the present invention exhibits an NRC of at least about 0.5. In a preferred embodiment, the body 120 of the present invention may have an NRC ranging from about 0.60 to about 0.99 - including all value and sub-ranges there-between.

In addition to reducing the amount of reflected sound in a single active room environment 2, the body 120 of the present invention may also be able to exhibit superior sound attenuation - which is a measure of the sound reduction between an active room environment 2 and a plenary space 3. The ASTM has developed test method E1414 to standardize the measurement of airborne sound attenuation between room environments 2 sharing a common plenary space 3. The rating derived from this measurement standard is known as the Ceiling Attenuation Class (CAC). Ceiling materials and systems having higher CAC values have a greater ability to reduce sound transmission through the plenary space 3 - i.e. sound attenuation function.

The body 120 of the present invention may exhibit a CAC value of 30 or greater. In some embodiments, the body 120 may exhibit a CAC value of 35 or greater.

The building panel 100 may further comprise the protective coating 200 applied to at least one of the upper surface 121 (also referred to the "upper major surface"), the lower surface 122 (also referred to the "lower major surface"), and/or the side surface 123 of the body 120.

As demonstrated by FIGS. 1-3, some embodiments include the protective coating 200 may include a face coating 210 that is applied to the upper surface 121 of the body 120 such that at least a portion of the protective coating 200 forms the first major surface 111 of the building panel 100. In other embodiments, the surface coating 200 may include an edge coating 230 that is applied to the side surface 123 of the body 120 such that at least a portion of the protective coating 200 forms the side surface 113 of the building panel 100.

In other embodiments, the building panel 100 may comprise both the face coating 210 applied to the first major surface 121 of the body 120 as well as the edge coating 230 applied to the side surface 123 of the body 120 such that the protective coating 200 forms at least a portion of first major surface 111 and the side surface 113 of the building panel 100.

Although not shown, the present invention may include the protective coating 200 as a back coating that is applied to the lower surface 122 of the body 120 such that at least a portion of the protective coating 200 forms the second

major surface 112 of the building panel 100.

The face coating 210 may comprise an upper surface 211 opposite a lower surface 212. The face coating 210 has a face coating thickness $t_2$ - as measured from the upper surface 211 to the lower surface 212 of the face coating 210. The face coating thickness $t_2$ may range from about 200 $\mu$m (micron) to about 500 $\mu$m - including all thicknesses and sub-ranges there-between. The lower surface 212 of the face coating 210 may be in direct contact with the upper surface 121 of the body 120. The upper surface 211 of the face coating 210 may form at least a portion of the first major surface 111 of the building panel 100 - as discussed further herein.

Although not shown, the building panel 100 of the present invention may further comprise a non-woven scrim. The non-woven scrim may comprise an upper surface opposite a lower surface. The lower surface of the non-woven scrim may be positioned immediately adjacent to and in direct contact with the upper surface 121 of the body 120. The face coating 210 may be applied to the non-woven scrim such that the lower surface 212 of the face coating 210 is in direct contact with the upper surface of the non-woven scrim.

The protective coating 200 may comprise a binder and a protective composition. In some embodiments, the protective coating 200 may further comprise a pigment, an additive, and/or a filler.

The protective coating 200, in the dry-state, may be present on the upper surface 121 of the body 120 (as the face coating 210) in an amount ranging from about 26 g/m$^2$ to about 450 g/m$^2$ - including all amounts and sub-ranges there-between. According to the present invention, the phrase "dry-state" indicates a composition that is substantially free of a liquid carrier (e.g., liquid water). Thus, the face coating 210 in the dry-state may comprise the all dry components (e.g., binder, protective composition, pigment) and less than about 0.1 wt. % of liquid carrier based on the total weight of the protective coating 200. In a preferred embodiment, the protective coating 200 in the dry-state has a solid's content of about 100 wt. % based on the total weight of the protective coating 200. Conversely, a composition that is in a "wet-state," which refers to a composition containing various amounts of liquid carrier - as discussed further herein.

The protective coating 200, in the dry-state, may be present on the lower surface 122 of the body 120 in an amount ranging from about 26 g/m$^2$ to about 450 g/m$^2$ - including all amounts and sub-ranges there-between.

The binder may be present in the protective coating 200 in an amount ranging from about 5 wt. % to about 20 wt. % based on the total dry-weight of the protective coating 200 - including all wt. % and sub-ranges there-between. The binder may be polymeric. The binder may have a glass transition temperature ("Tg") that is greater than room temperature ("Tm") - wherein room temperature ranges from about 21 °C to about 40 °C - including all temperatures and sub-ranges there-between. In some embodiments, the first binder may have an overall charge that is anionic.

Non-limiting examples of the first binder include polymers selected from polyvinyl alcohol (PVOH), latex, an acrylic polymer, polymaleic anhydride, or a combination of two or more thereof. Non-limiting examples of latex binder may include a homopolymer or copolymer formed from the following monomers: vinyl acetate (i.e., polyvinyl acetate), vinyl propinoate, vinyl butyrate, ethylene, vinyl chloride, vinylidene chloride, vinyl fluoride, vinylidene fluoride, ethyl acrylate, methyl acrylate, propyl acrylate, butyl acrylate, ethyl methacrylate, methyl methacrylate, butyl methacrylate, hydroxyethyl methacrylate, hydroxyethyl acrylate, styrene, butadiene, urethane, epoxy, melamine, and an ester. Preferably the binder is selected from the group consisting of aqueous lattices of polyvinyl acetate, polyvinyl acrylic, polyurethane, polyurethane acrylic, polystyrene acrylic, epoxy, polyethylene vinyl chloride, polyvinylidene chloride, and polyvinyl chloride.

The protective composition may comprise a protective component. The protective component may be referred to as an "antimicrobial component." The antimicrobial component may be the component that imparts the antimicrobial activity to the resulting coating. The antimicrobial component may be referred to as an "antibacterial component" when the coating exhibits antibacterial activity. The antimicrobial component may be referred to as an "antifungal component" when the coating exhibits antifungal activity.

It has been discovered that the protective component of the present invention may be capable of imparts more than one type of antimicrobial activity to the resulting coating - therefore, the antibacterial protective component may not preclude the protective component from simultaneously functioning as an antifungal component.

The protective component may comprise a boro-phosphate ester zinc compound (also referred to as the "boro-phosphate zinc compound"). The boro-phosphate zinc compound may be the reaction product of a borate-ester and a phosphate-ester in the presence of zinc oxide.

In a non-limiting embodiment, the boro-phosphate zinc compound may be manufactured by blending together zinc oxide and the phosphate ester for a first period of time. After the first period of time, the boro-ester may be added and subsequently further blended for a second period of time during which an exothermic reaction occurs - thereby forming the boro-phosphate zinc compound. Subsequently, the boro-phosphate zinc compound may be cooled and collected for addition to the coating 200 of the present invention.

The boro-ester may be a lower alkyl ester, nitrogen containing ester, or a combination thereof. The term 'lower alkyl' is as defined elsewhere in the description. Suitable alkyl borate esters may be selected from mono- di- or tri- alkyl borates. Examples of alkyl borate esters include, but are not limited to, trimethyl borate, triethyl borate, tripropyl borate, or combinations thereof.

The phosphate-ester may be an alkoxylated phosphate ester. The alkoxylated phosphate ester may be selected

from an ester of at least one fatty alcohol, at least one fatty phenol, or a combination thereof.

The alkoxylated fatty alcohol phosphate ester or alkoxylated fatty phenol phosphate ester may be selected from compounds having general structure (I):

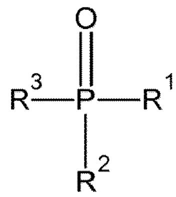

(I)

wherein $R^1$, $R^2$, and $R^3$ each independently represent a hydroxyl group or a residue of an alkoxylated fatty alcohol or alkoxylated fatty phenol.

The alkoxylated fatty alchohol residues and alkoxylated fatty phenol residues bonded to the phosphate ester may be selected from compounds of formula (II):

$$-O-(AO)_x-(Ph)_y-R^4 \qquad (II)$$

The group $R^4$ may be selected from a fatty moiety. Said fatty moiety may be saturated or unsaturated, linear or branched, and/or substituted or unsubstituted.

If unsaturated fatty moieties are used, they may be selected from fatty moieties having either a cis/trans configuration, and may comprise one or more than one unsaturated double bonds.

In some embodiments, the fatty moeities used are saturated fatty moeities. The fatty moeities may be linear fatty moeities. The fatty moeities may be saturated linear fatty moeities.

For alkoxylated fatty alcohol residues, suitable fatty moieties may be selected from those comprising a total of 5 to 22 carbon atoms. In some embodiments, the fatty moiety comprises from 8 to 18 carbon atoms. In some embodiments, the fatty moiety comprises from 10 to 15 carbon atoms.

For alkoxylated fatty alcohol residues, suitable fatty moieties may be selected from those comprising a total of 5 to 18 carbon atoms. In some embodiments, the fatty moiety comprises from 6 to 15 carbon atoms. In some embodiments, the fatty moiety comprises from 7 to 11 carbon atoms.

It will be understood that, when describing the number of carbon atoms, this refers to the total number of carbon atoms present in the fatty moiety, including any present in any branch groups.

he group AO as shown in formula (II) represents an oxyalkylene group. The term Oxyalkylene' as used herein, generally refer to molecular structures containing the following repeating units: $-R^5-0-$, wherein $R^5$ represents a lower alkyl.

The term 'lower alkyl' as used herein, unless otherwise defined, refers to saturated hydrocarbon radicals being straight chain, or branched moieties, containing 1 to 8 carbon atoms - including all sub-ranges there-between. In some embodiments, the lower alkyl groups each contain 1 to 6 carbon atoms - including all sub-ranges there-between.

Examples of lower alkyl radicals may be independently selected from methyl, ethyl, n-propyl, isopropyl, n-butyl, isobutyl, sec-butyl, tert-butyl, 2 methyl- butyl, pentyl, or hexyl.

The oxyalkylene group AO may be selected from oxyethylene, oxypropylene, oxybutylene, and oxytetramethylene. Preferably, the oxyalkylene group is selected from oxyethylene (EO) and oxypropylene (PO).

The oxyalkylene group may be used in the residue of an alkoxylated fatty alcohol or alkoxylated fatty phenol in a non-polymerised form and therefore the value of x would be 1. The oxyalkylene group AO may be oligomerised or polymerised to give a (poly)oxyalkylene chain $[(AO)_x]$ comprising x oxyalkylene monomer units. In such a (poly) oxyalkylene chain the value x represents an integer preferably having a value in the range from 2 to 30. Preferably, x is an integer having a value in the range from 3 to 20. In some embodiments, x is an integer having a value in the range from 4 to 10. Most preferably, x is an integer having a value in the range from 5 to 7.

The alkoxylated fatty alchohol residues and alkoxylated fatty phenol residues may therefore preferably have between about 2 and about 30 moles of the alkoxylating moieties present for each fatty alcohol or fatty phenol moiety. Preferably, between about 5 and about 7 moles of the alkoxylating moieties present.

The (poly)oxyalkylene chain may be homogeneous in that it comprises only one specific type of oxyalkylene monomer unit. Alternatively, the oxyalkylene monomer units may vary along the (poly)oxyalkylene chain. The (poly) oxyalkylene chain may be a random (statistical) or block copolymeric chain.

The group Ph of formula (II) represent a phenyl group, which may be substituted with one or more substitution groups. Suitable substitution groups may be selected from lower alkyl, halo, and hydroxyl.

The term 'lower alkyl' is as defined elsewhere in the description. The term 'halo' as used herein, unless otherwise

defined, refers to halide radicals derived from elements in Group VII (Group 17) of the periodic table. The halide radicals may be independently selected from fluoro, chloro, bromo, or iodo. The value y is an integer and has a value of either 0 or 1. It will be understood that for alkoxylated fatty alchohol residues the value of y will be 0, and for alkoxylated fatty phenol residues the value of y will be 1.

The alkoxylated fatty alchohol residues and alkoxylated fatty phenol residues may be derived from natural fatty alcohols or fatty phenols which are subsequently alkoxylated.

Preferred, optionally naturally derived, fatty alcohols may comprise between 8 and 20 carbon atoms. Suitable, optionally naturally derived, fatty alcohols may be selected from capryl alcohol, pelargonic alcohol, capric alcohol, undecyl alcohol, lauryl alcohol, tridecyl alcohol, myristyl alcohol, pentadecyl alcohol, cetyl alcohol, heptadecyl alcohol, and stearyl alcohol.

Particularly preferred, optionally naturally derived, fatty alcohols may be selected from lauryl alcohol, tridecyl alcohol, or myristyl alcohol. Suitable, optionally naturally derived, fatty phenols may be selected from hexyl phenol, heptyl phenol, octyl phenol, nonyl phenol, decyl phenol, undecyl phenol, dodecyl phenol, tridecyl phenol, tetradecyl phenol, or pentadecyl phenol.

Particularly preferred, optionally naturally derived, fatty phenols may be selected from octyl phenol, nonyl phenol, or decyl phenol. [0048] Said fatty moiety $R^4$ group may be bonded to the phenyl ring at the ortho-, meta-, or para- position with respect to the hydroxyl group. Preferably, said fatty moiety $R^4$ group is bonded at the para- position.

The alkoxylated fatty alcohol phosphate esters or alkoxylated fatty phenol phosphate esters used in accordance with the present invention may be selected from mono-, di-, or triesters.

In the embodiments where di-, or tri- esters are used, each phosphate ester may comprise identical ester groups, mixtures of different alkoxylated fatty alcohol esters, mixtures of different alkoxylated fatty phenols esters, or mixtures of alkoxylated fatty alcohol esters and alkoxylated fatty phenols esters. In some embodiments, each phosphate ester comprises identical esters groups.

Alternatively, the composition may comprise a blend of different phosphate esters, including mixtures of phosphate esters of alkoxylated fatty alcohol and phosphate esters of alkoxylated fatty phenols, and/or mixtures of mono-, di-, and/or tri- esters.

In some embodiments, the phosphate esters comprise a mixture of mono- and diesters. In such an embodiment the amount of phosphate monoesters may be in the range from 30 wt.% to 95 wt.% of the total phosphate esters, and the amount of phosphate diesters may be in the range from 5 wt.% to 70 wt.% of the total phosphate esters.

The alkoxylated fatty alcohol phosphate ester and alkoxylated fatty phenol phosphate ester of the present invention may be made by any suitable method, and are not limited to formation by any specific method.

By way of example, the phosphate esters of the alkoxylated fatty alcohols of the present invention may be formed by reacting alkoxylated fatty alcohols, respectively, with phosphorous pentoxide ($P_2O_5$).

The alkoxylated fatty alcohols or alkoxylated fatty phenols may prepared by initially reacting, either sequentially, or in their mixed forms, the fatty alcohols or phenols with an epoxide, ethylene oxide, propylene oxide, or mixtures thereof, in the presence of an acidic or basic catalyst.

Examples of suitable phosphate esters having general structure (I) that may be used include, but are not restricted to: alkoxylated fatty phenol phosphate esters comprising a mixture of mono and di esters

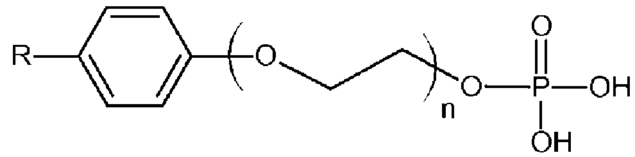

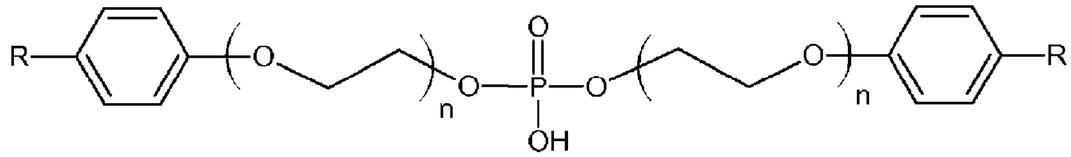

where each R represents a saturated straight chain $C_9H_{19}$ group, and n is between 5 and 7; or alkoxylated fatty alcohol phosphate esters comprising a mixture of mono and di esters

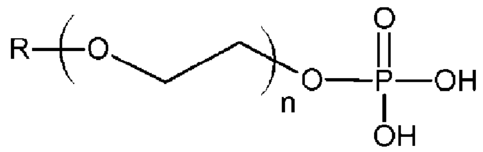

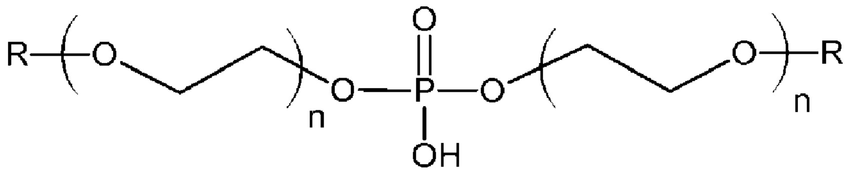

where each R represents a saturated straight chain $C_{13}H_{27}$ group, and n is between 5 and 7.

In some embodiments, the protective component may be substantially free of zinc borate. In some embodiments, the protective component may be substantially free of a physical blend of the phosphate ester, borate-ester, and zinc oxide. Rather, in such embodiments, the antimicrobial component may comprise the reaction product of the phosphate-ester, borate-ester, and zinc oxide but be substantially free of the physical blend of such components.

In some embodiments, the protective component may be free of zinc borate. In some embodiments, the protective component may be free of a physical blend of the phosphate ester, borate-ester, and zinc oxide. Rather, in such embodiments, the antimicrobial component may comprise the reaction product of the phosphate-ester, borate-ester, and zinc oxide but be free of the physical blend of such components.

The boro-phosphate ester of zinc oxide may be present in the protective composition in an amount of about 90 wt. % to about 100 wt. % based on the total weight of the protective composition. The boro-phosphate ester of zinc oxide may be present in the protective composition in an amount of about 100 wt. % based on the total weight of the protective composition.

In some embodiments, the protective composition may be substantially free of sulfur-containing benzimidazole compounds. In some embodiments, the protective composition may be substantially free of triazole compounds. In some embodiments, the protective composition may be substantially free of 2,2-dibromo-3 nitrilopropionamide. In some embodiments, the protective composition is substantially free of biocides other than the boro-phosphate ester of zinc oxide.

The protective composition may be present in the protective coating 200 in an amount ranging from about 0.5 wt. % to about 20.0 wt. % based on the total dry-weight of the protective coating 200 - including all wt. % and sub-ranges there-between. The protective composition may be present in the protective coating 200 in an amount ranging from about 2.0 wt. % to about 15.0 wt. % based on the total dry-weight of the protective coating 200 - including all wt. % and sub-ranges there-between.

In a non-limitnig embodiment, the boro-phosphate ester of zinc oxide may be produced according to the following steps: zinc oxide may be added to a container, whereby subsequently an amount of alkoxylate and phosphoric acid may be added to the zinc oxide inside of the container to form a first mixture. The first mixture may be blended with agitation for a first period of time. After the first period of time, an amount of boric acid salt may be added to the first mixture to form a second mixture. The second mixture may then be agitated for a second period of time, whereby an exothermic reaction occurs to form the boro-phosphate ester of zinc oxide. Subsequently, the container may be cooled and the boro-phosphate ester of zinc oxide may be collected.

The pigment may be present in the protective coating 200 in an amount ranging from about 70 wt. % to about 95 wt. % - including all wt. % and sub-ranges there-between - based on the total dry-weight of the protective coating 200. Similar to the phrase "dry-state" - the phrase "dry-weight" refers to the weight of a component or composition without including any additional weight of liquid carrier. Thus, when calculating the dry weight of a component or composition, the calculation should be based solely on the weight of the solid components (e.g., pigment, binder, etc.), and should exclude any amount of residual liquid carrier that may still be present from the wet-state.

The pigment may be an inorganic pigment. The pigment may be selected from one or more of particles of carbon black, graphite, graphene, copper oxide, copper oxide containing glasses, iron oxide, zinc oxide, calcium carbonate, manganese oxide, titanium dioxide, calcium carbonate, silver halides, silver containing glasses, and combinations thereof. The inorganic pigments may include individual particles having colors selected from, but not limited to, red, blue, yellow, black, green, brown, violet, white, grey and combinations thereof.

The protective coating 200 may further comprise a dispersant. The dispersant may be present in the protective coating 200 in an amount ranging from about 0.1 wt. % to about 2.0 wt. % based on the total dry-weight of the protective coating 200 - including all wt. % and sub-ranges there-between. In some embodiments, the dispersant may be present in the protective coating 200 in an amount ranging from about 0.1 wt. % to about 1.0 wt. % based on the total dry-weight of the

protective coating 200 - including all wt. % and sub-ranges there-between. The dispersant may be ionic in nature - i.e., comprise one or more ionic groups such as anionic group or cationic group. In some embodiments, the ionic group is anionic.

According to some embodiments, the dispersant may comprise an anionic polyacrylic polymer having a salt group formed from a neutralization of an acid group with a compound forming a cation. For examples, the polymer may comprise one or more pendant side chains comprising a terminal carboxylic acid group that is neutralized with sodium or ammonia to form a carboxylate anion and a sodium cation and/or ammonium cation. Alternatively, the polymer may comprise one or more pendant side chains comprising a terminal sulfonic acid group that is neutralized with the aforementioned sodium or ammonia compounds to form a salt group.

The protective coating 200 may further comprise a rheology agent. The term "rheology agent" refers to a component capable of modifying the rheological properties (e.g., viscosity) if the protective coating in the wet-state. The rheology agent may be present in the protective coating 200 in an amount ranging from about 0.05 wt. % to about 0.5 wt. % based on the total dry-weight of the protective coating 200 - including all wt. % and sub-ranges there-between. In some embodiments, the rheology agent may be present in the protective coating 200 in an amount ranging from about 0.1 wt. % to about 0.5 wt. % based on the total dry-weight of the protective coating 200 - including all wt. % and sub-ranges there-between.

Non-limiting examples of rheology agent include thickeners. A non-limiting example of thickener includes natural cellulosics, e.g. hydroxyl ethyl cellulose,-carboxymethyl cellulose, and polysaccharides. Inorganic thickeners, e.g. organoclay and hydrous magnesium aluminum-silicate. The synthetic thickeners, e.g. acrylic, HEUR, ASE,.

defoamers, wetting agents, flame retardants, and the like. The additive may be present in an amount ranging from about 0.01 wt. % to about 30 wt. % based on the total dry weight of the protective coating 200.

The protective coating 200 may further comprise a hydrophobic component. According to the present invention, the term "hydrophobic" means a composition or component that is difficult to wet and is capable of repelling liquid water under atmospheric conditions. Thus, as used herein, the term "hydrophobic" refers to a surface that generates a contact angle of greater than 90° with a reference liquid (i.e. water).

The hydrophobic component may be present in the protective coating 200 an amount ranging from about 0.1 wt. % to about 10 wt. % based on the total weight of the protective coating 200 - including all value and sub-ranges there-between. In some embodiment, the hydrophobic component may be present in the protective coating 200 in an amount ranging from about 1 wt. % to about 8 wt. % based on the total dry-state weight of the protective coating 200 - including all value and sub-ranges there-between. In some embodiments, the hydrophobic component may be present in an amount ranging from about 3 wt. % to about 5 wt. %, based on the total dry-state weight of the protective coating 200 - including all value and sub-ranges there-between.

Non-limiting examples of the hydrophobic component include waxes, silicones, fluoro-containing additives, and combinations thereof - as discussed further herein.

The wax may have a number average molecular weight ranging from about 100 to about 10,000 - including all values and sub-ranges there-between. The wax may have a melting point (Tm) ranging from about 0 °C to about 150 °C - including all values and sub-ranges there-between. In some embodiments, the wax may have a melting point ranging from about 8 °C to about 137 °C - including all values and sub-ranges there-between.

Non-limiting examples of wax include paraffin wax (i.e. petroleum derived wax), polyolefin wax, as well as naturally occurring waxes and blends thereof. Non-limiting examples of polyolefin wax include high density polyethylene ("HDPE") wax, polypropylene wax, polybutene wax, polymethypentene wax, and combinations thereof. Naturally occurring waxes may include plant waxes, animal waxes, and combination thereof. Non-limiting examples of animal waxes include beeswax, tallow wax, lanolin wax, animal fat based wax, and combinations thereof. Non-limiting examples of plant waxes include soy-based wax, carnauba wax, ouricouri wax, palm wax, candelilla wax, and combinations thereof.

The hydrophobic component may be applied as a water-based emulsion. The emulsion may be anionic or non-ionic. The emulsion may have a solid content (i.e., the amount of wax within the hydrophobic component) ranging from about 20 wt. % to about 60 wt. % based on the emulsion - including all value and sub-ranges there-between.

The wax may be present in an amount ranging from about 1 wt. % to about 8 wt. % based on the total dry-state weight of the protective coating 200 - including all percentages and sub-ranges there-between. In some embodiments, the wax is present in an amount ranging from about 2.0 wt. % to about 5.0 wt. % based on the dry-weight of the protective coating 200 - including all percentages and sub-ranges there-between.

The silicone may be selected from a silane, a siloxane, and blends thereof. Non-limiting examples of siloxane include dimethysiloxane, silsesquioxane, aminoethylaminopropyl silsesquioxane, octamethylcyclotetrasiloxane, and combinations thereof. In some embodiments, the siloxane may be hydroxyl terminated.

Non-limiting examples of silanes include saturated compounds having hydrogen and silicon atoms and are bonded exclusively by single bonds. Each silicon atom has 4 bonds (either Si-R or Si-Si bonds), wherein R may be hydrogen (H), or a C1-C10 alkyl group - including but not limited to methyl, ethyl, propyl, butyl, etc. Each R groups is joined

to a silicon atom (H-Si bonds). A series of linked silicon atoms is known as the silicon skeleton or silicon backbone. The number of silicon atoms is used to define the size of the silane (e.g., $Si_2$-silane). A silyl group is a functional group or side-chain that, like a silane, consists solely of single-bonded silicon and hydrogen atoms, for example a silyl ($-SiH_3$) or disilanyl group. The simplest possible silane (the parent molecule) is silane, $SiH_4$.

Silanes used herein may be organofunctional silanes of formula:

$$Y\text{-}R\text{-}Si\text{-}(R^1)_m(\text{-}OR^2)_{3-m}$$

where Y is a hydroxyl group or a primary or secondary amino group and $R^1$ and $R^2$ are the same or different, monovalent, optionally substituted hydrocarbon groups which comprise between 1 and 12 carbon atoms and can be interrupted with heteroatoms. Silanes operative herein illustratively include an aromatic silane or an alkyl silane. The alkyl silane may comprise linear alkyl silane such as methyl silane, fluorinated alkyl silane, dialkyl silanes, branched and cyclic alkyl silanes etc. A non-limiting example of the silane is octyltriethoxysilane.

Non-limiting examples of a siloxane may include silicon oil, such as acyclic and/or cyclic dimethyl silicone oil - including but not limited to dimethylsiloxane, hexamethyldisiloxane, octamethyltrisiloxane, decamethylcyclopentasiloxane, octamethylcyclotetrasiloxane, and combinations thereof.

The silicone may be a water-based emulsion blend of silane and siloxane, such as commercially available IE-6682 from Dow Corning ®, IE-6692 from Dow Corning ®, and IE-6694 from Dow Corning ®.

The fluoro-containing additives may comprise fluorocarbon-modified polyacrylate neutralized with dimethyl ethanol amine (DMEA) or a fluorosurfactant. The fluorosurfactant may be nonionic or anionic. The anionic moiety of the fluorosurfactant according to the present invention is selected from a sulfate, sulfonate, phosphate, or carboxylate moiety. According to some embodiments, the fluorosurfactant of the present invention may have at least one of the following formulas:

**Formula I:** $(R_fAO)S(O)_2(O^-M^+)$

**Formula II:** $(R_fAO)P(O)(O^-M^+)_2$

**Formula III:** $(R_fAO)_2P(O)(O^-M^+)$

**Formula IV:** $(R_fAO)C(O)(O^-M^+)$

wherein $R_f$ is a $C_1$ to $C_{16}$ linear or branched perfluoroalkyl, which may be optionally interrupted by one, two or three ether oxygen atoms.

A is selected from: $(CH_2CF_2)_m(CH_2)n$; $(CH_2)_oSO_{2N}(CH_3)(CH_2)_p$; $O(CF_2)_q(CH_2)_r$; or $OCHFCF_2OE$;

m is 0 to 4;
n, o, p, and r, are each independently 2 to 20;
q is 2;
E is a $C_2$ to $C_{20}$ linear or branched alkyl group optionally interrupted by oxygen, sulfur, or nitrogen atoms; a cyclic alkyl group, or a $C_6$ to $C_{10}$ aryl group;
M is a Group I metal or an ammonium cation $(NHx(R_2)y)^+$, wherein R2 is a $C_1$ to $C_4$ alkyl; x is 1 to 4; y is 0 to 3; and x + y is 4.

The defoamer may be present in an amount ranging from about 0.05 wt. % to about 0.2 wt. % (including all values and sub-ranges there-between) - based on the total weight of the protective coating 200 in the dry-state.

Non-limiting examples of defoamer may include polyalphaolefin formed from one or more monomers of 1-hexene, 1-heptene, 1-octene, 1-nonene, 1-decene, 1-undecene, 1-tridecene, 1-tetradecene, 1-pentadecene, 1-hexadecene, 1-octadecene, 1-heptadecene, and 1-nonadecene; a high density polymer selected from oxidized ethylene homopolymers, polyethylene homopolymers, and polypropylene homopolymers; a silicone oil, polypropylene glycol, and diethylenetriamine; and a non-ionic surfactant compound selected from polyether modified polysiloxane, polyethylene glycol oleate, and polyoxypropylene-polyoxyethylene copolymer - as well as mixtures thereof.

The coating of the present invention may further comprise filler. The filler may comprise one or more inorganic particles. Non-limiting examples of such inorganic particles include limestone, calcium carbonate, clay, dolomite, talc, perlite, gypsum, calcite, aluminum trihydrate, zinc oxide, and combinations thereof. The inorganic particles may have a particle size ranging from about 0.1 μm to about 300 μm - including all values and sub-ranges there-between. The inorganic particles may be present in an amount ranging from about 0 wt. % to about 95wt. % (including all values and sub-ranges there-between) - based on the total weight of the protective coating 200 in the dry-state.

The protective coating 200 may be formed by applying a coating composition in the wet-state. The coating composition may comprise the dry components of the protective coating 200 (e.g., the binder, the protective agent, the pigment, the dispersant, etc.) blended with a liquid carrier. The liquid carrier may be selected from water, VOC solvent - such as acetone, toluene, methyl acetate - or combinations thereof. In some embodiments, the liquid carrier may be water and comprises less than 1 wt. % of VOC solvent based on the total weight of the liquid carrier.

The coating composition may have a solid's content of at least 15 wt. % based on the total weight of the coating composition in the wet-state. Stated otherwise, the liquid carrier is present in a maximum amount of about 85 wt. % based on the total weight of the coating composition in the wet-state.

The solids content of the coating composition in the wet-state may range from about 15 wt. % to about 80 wt. % - including all wt. % and sub-ranges there-between. In some embodiments, the solids content of the coating composition in the wet-state may range from about 20 wt. % to about 70 wt. % based on the total weight of the coating composition - including all wt. % and sub-ranges there-between. In some embodiments, the coating composition in the wet-state may have a solids content ranging from 54 wt. % to about 68 wt. - including all wt. % and sub-ranges there-between. % based on the total weight of the coating composition.

The solid's content is calculated as the fraction of materials present in the wet-state coating composition that are not the liquid carrier. Specifically, the solid's content of the wet-state coating composition may be calculated as the amount of binder, filler, pigment, dispersant, defoamer, protective agent, flame retardant, in the dry-state coating composition and dividing it by the total weight of the coating composition in the wet-state (including both solid components and liquid carrier).

Therefore, the amount of each component in the wet-state coating may be calculated by multiplying the desired amount of each of the dry component (e.g., pigment, protective agent) that is present in the protective coating 200 in the dry-state by the total solids content of the coating composition in the wet-state. For example, for a protective coating 200 in the dry-state comprising about 70 wt. % of pigment, whereby that protective coating 200 was applied as a wet-state coating composition having a solids content of 65 wt. % - the amount of the pigment in the wet-state coating composition would be 45.5 wt. % based on the total weight of the coating composition in the wet-state - i.e., 70 wt. % x 0.65 = 45.5 wt. % of pigment in the coating composition in the wet-state.

The coating composition in the wet-state may be applied to one of the upper surface 121, the lower surface 122, and/or the side surface 123 of the body 120 in an amount ranging from about 26 g/m$^2$ to about 450 g/m$^2$ - including all sub-ranges and values there-between. The coating composition in the wet-state may be applied by roll coating, brush coating, and spray coating, and/or curtain blade.

Specifically, the coating composition may be dried from the wet-state to the dry-state in a conventional oven at a first elevated temperature for a first drying period. The first elevated temperature may range from about 67 °C to about 232 °C - including all sub-ranges and temperature there-between. In some embodiments, the first elevated temperature may range from about 67 °C to about 190 °C - including all sub-ranges and temperature there-between. In some embodiments, the first elevated temperature may range from about 93 °C to about 232 °C - including all sub-ranges and temperature there-between.

The first drying period may range from about 10 seconds to about 120 seconds - including all sub-ranges and temperature there-between.

The protective coating 200 in the dry-state may be substantially continuous. The term "substantially continuous" refers to less than 5 % of the available surface area on the referenced surface contains pin-holing or blistering. The protective coating 200 may be substantially continuous such that the acoustic properties of the body 120 are not substantially hindered, thereby allowing the resulting building panel 100 to also function as an acoustical building panel. Stated otherwise, even with the protective coating 200 applied to one or more of the upper surface 121, the lower surface 122, and/or the side surface 123 of the body 120, the overall building panel 100 may still exhibit acoustical properties (i.e., NRC and CAC performance) substantially equal to and/or overlapping with that of the naked body

The building panel of the present invention may be a ceiling panel or tile, wall panel, wall covering (e.g., wallpaper) or directly to a wall (e.g., painted dry wall, wood wall paneling, such as wainscot, baseboard molding, crown molding). In other embodiments, the coating composition may be applied directly to a glass surface (e.g., a door, a window, etc.). In other embodiments of the present invention, the coating composition may be applied various textiles - such as felts, upholstery, or window hangings (e.g., curtains), and various paper products (e.g., paper towels, coated paper, cardboard, and the like), decorative shower-curtaining liners. In other embodiments, the coating composition may be applied to a window blind (formed from cellulosic material, polymeric material, or inorganic material). The coating composition may be applied to other various indoor surfaces for the purpose of reducing VOCs and odor in a closed-environment. In other embodiments, the coating composition may be applied to packaging products (e.g., styrofoam, recycled packaging).

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

While the invention has been described with respect to specific examples including presently preferred modes of

carrying out the invention, those skilled in the art will appreciate that there are numerous variations and permutations of the above described systems and techniques. It is to be understood that other embodiments may be utilized and structural and functional modifications may be made without departing from the scope of the present invention. Thus, the spirit and scope of the invention should be construed broadly as set forth in the appended claims.

EXAMPLES

An experiment was conducted to determine the anti-microbial activity of the anti-microbial coating of the present invention.

The binder includes a polymeric binder. The pigment composition comprises $TiO_2$ as well as pigment extender. The additive comprises one or more dispersants, humectants, filler, flame retardants, and viscosity modifying agents. The antimicrobial agents of the following experiment include:

Antimicrobial Agent 1 ("AA1"): zinc borate

Antimicrobial Agent 2 ("AA2"): boro-phosphate ester of zinc oxide

The dry formulation of each coating of Comparative Examples 1-3 and Example 1 are set forth in Table 1 - the amounts of Table 1 are weight percent of dry mass.

**Table 1**

| | Comp. Ex. 1 | Comp. Ex. 2 | Comp. Ex. 3 | Ex. 1 |
|---|---|---|---|---|
| Binder | 16.1 | 16.1 | 16.1 | 16.1 |
| AA1 | 9.9 | 9.9 | 9.9 | - |
| AA2 | - | - | - | 9.9 |
| Pigment | 42.1 | 42.1 | 42.1 | 42.1 |
| Additive | 31.9 | 31.9 | 31.9 | 31.9 |
| | | | | |
| Total Solids | 100% | 100% | 100% | 100% |

In the wet-state, each coating formulation of Comparative Examples 1-3 and Example 1 had liquid carrier added to achieve the desired solids content. The solid's content of each coating in the wet-state is set forth in Table 2 - the amounts of Table 2 are weight percent.

**Table 2**

| | Comp. Ex. 1 | Comp. Ex. 2 | Comp. Ex. 3 | Ex. 1 |
|---|---|---|---|---|
| Solid Content Amount | 40%-70% | 40%-70% | 40%-70% | 40%-70% |
| Liquid Carrier Amount | 60%-30% | 60%-30% | 60%-30% | 60%-30% |
| Total Amount | 100 | 100 | 100 | 100 |

Each coating was further evaluated for antimicrobial characteristics. Specifically, each coating was applied to a fibrous substrate (herein referred to a test piece), whereby each test piece was then placed in an agar dish having inoculated agar surface of each relevant microbial organism. After incubation, the test pieces were evaluated for the presence of a zone of inhibition as well as growth of the test organism beneath the test piece - the results set forth below in Table 3.

**Table 3**

| | Comp. Ex. 1 | Comp. Ex. 2 | Comp. Ex. 3 | Ex. 1 |
|---|---|---|---|---|
| | | | | |

(continued)

| | | | | |
|---|---|---|---|---|
| Staphylococcus aureus | | | | |
| Inhibition Zone | Y | Y | Y | N |
| Growth | N | N | N | N |
| | | | | |
| Klebsiella pneumoniae | | | | |
| Inhibition Zone | N | Y | Y | N |
| Growth | N | N | N | N |
| | | | | |
| Escherichia Coli | | | | |
| Inhibition Zone | N | Y | Y | N |
| Growth | N | N | N | N |

As demonstrated by Tables 1 and 3, although the boro-phosphate zinc compound anti-microbial agent of Example 1 did not create a zone of inhibition, it did unexpectedly prevent growth beneath the test sample. Such result is impactful as it provides a surprisingly effective manner to impart anti-microbial growth onto a building panel without having to use zinc-borate (non-ester zinc compound).

## Claims

1. A building panel comprising:

   a fibrous substrate; and
   a coating applied to the substrate, the coating comprising a blend of:

      an antimicrobial composition;
      a binder; and
      a pigment;

   wherein the antimicrobial composition comprises boro-phosphate ester zinc compound.

2. The building panel according to claim 1, wherein the antimicrobial composition consists of the boro-phosphate ester of zinc compound.

3. The building panel according to any one of claims 1 to 2, wherein the antimicrobial agent is substantially free of a blend of phosphate ester, borate ester, and metal oxide as physically blended components.

4. The building panel according to any one of claims 1 to 3, wherein the antimicrobial composition is present in an amount ranging from about 7 wt. % to about 13 wt. % based on the total weight of the coating.

5. The building panel according to any one of claims 1 to 4, wherein the coating is present on the substrate in an amount ranging from about 50 g/$m^2$ to about 400 g/$m^2$.

6. The building panel according to any one of claims 1 to 5, wherein pigment is present in an amount ranging from about 40 wt. % to about 80 wt. % based on the total weight of the coating.

7. The building panel according to any one of claims 1 to 6, wherein the fibrous substrate is a porous structure and the building panel is an acoustical ceiling panel.

8. The building panel according to claim 7, wherein the fibrous substrate comprises inorganic fiber.

9. The building panel according to any one of claims 1 to 8, wherein the antimicrobial composition is free of biocides other

than zinc borate, and wherein the antimicrobial composition is free of triazole compounds.

**10.** The building panel according to any one of claims 1 to 9, wherein the boro-phosphate zinc compound is the reaction product of zinc oxide, boric acid salt, phosphoric acid, and alkoxylate.

**11.** A building system comprising:

a support surface; and
at least one building panel according to claims 1 to 10,
wherein the building panel is supported by the support surface.

**12.** A coating composition comprising:

a liquid carrier;
an antimicrobial composition present in an amount ranging from about 0.5 wt. % to about 15 wt. % based on the total weight of the coating composition;
a binder; and
a pigment present in an amount ranging from about 25 wt. % to about 55 wt. % based on the total weight of the coating composition;
wherein the antimicrobial composition comprises a boro-phosphate ester zinc compound.

**13.** The coating composition according to claim 12, wherein the antimicrobial agent is substantially free of a blend of phosphate ester, borate ester, and metal oxide as physically blended components.

**14.** The coating composition according to any one of claims 12 or 13, wherein the boro-phosphate zinc compound is the reaction product of zinc oxide, boric acid salt, phosphoric acid, and alkoxylate.

**15.** A method of coating a substrate comprising:

a) applying the coating composition according to anyone of claims 15 to 21 to a fibrous substrate;
b) drying the coating composition such that the liquid carrier is removed from the substrate.

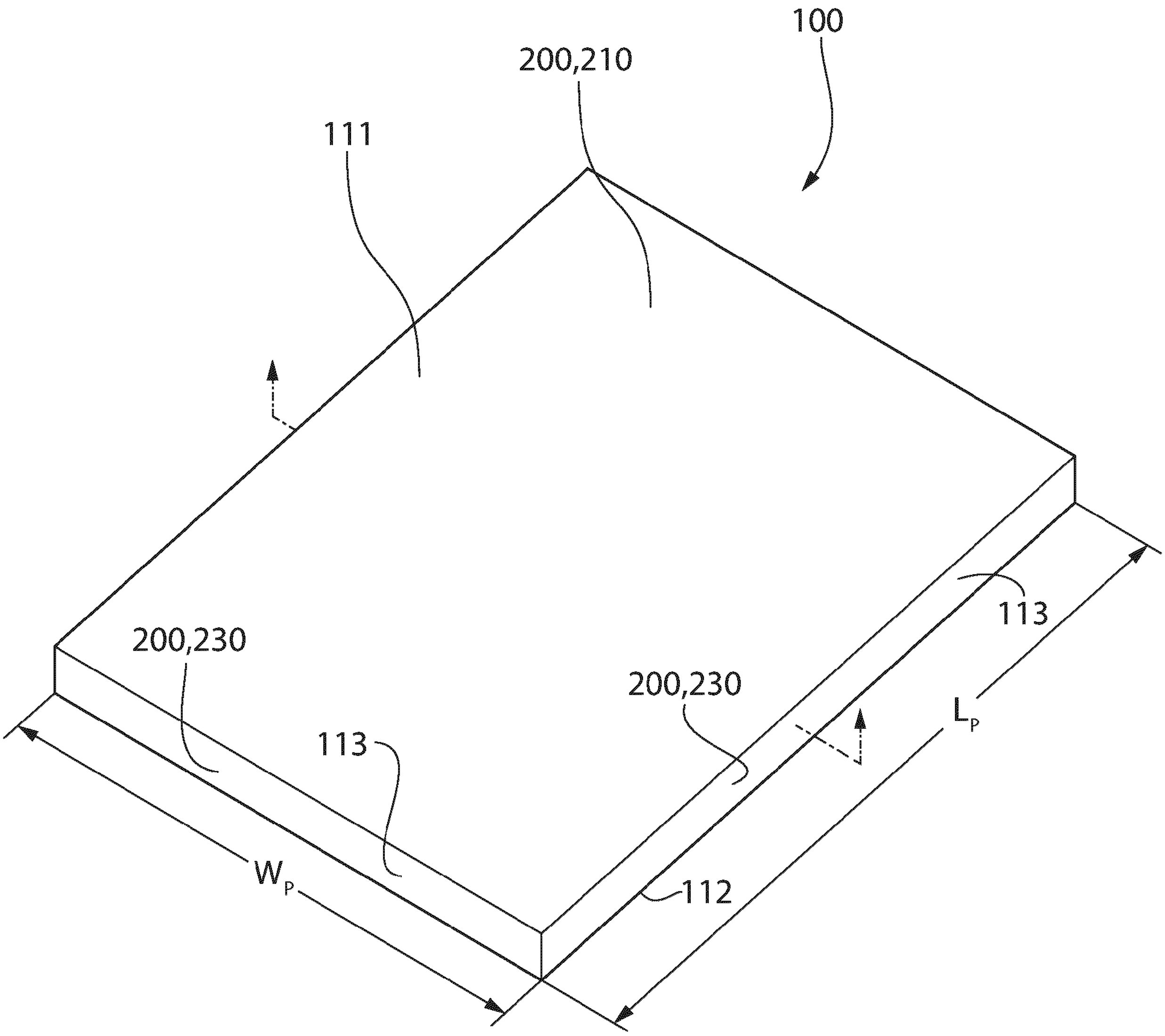


FIG. 1

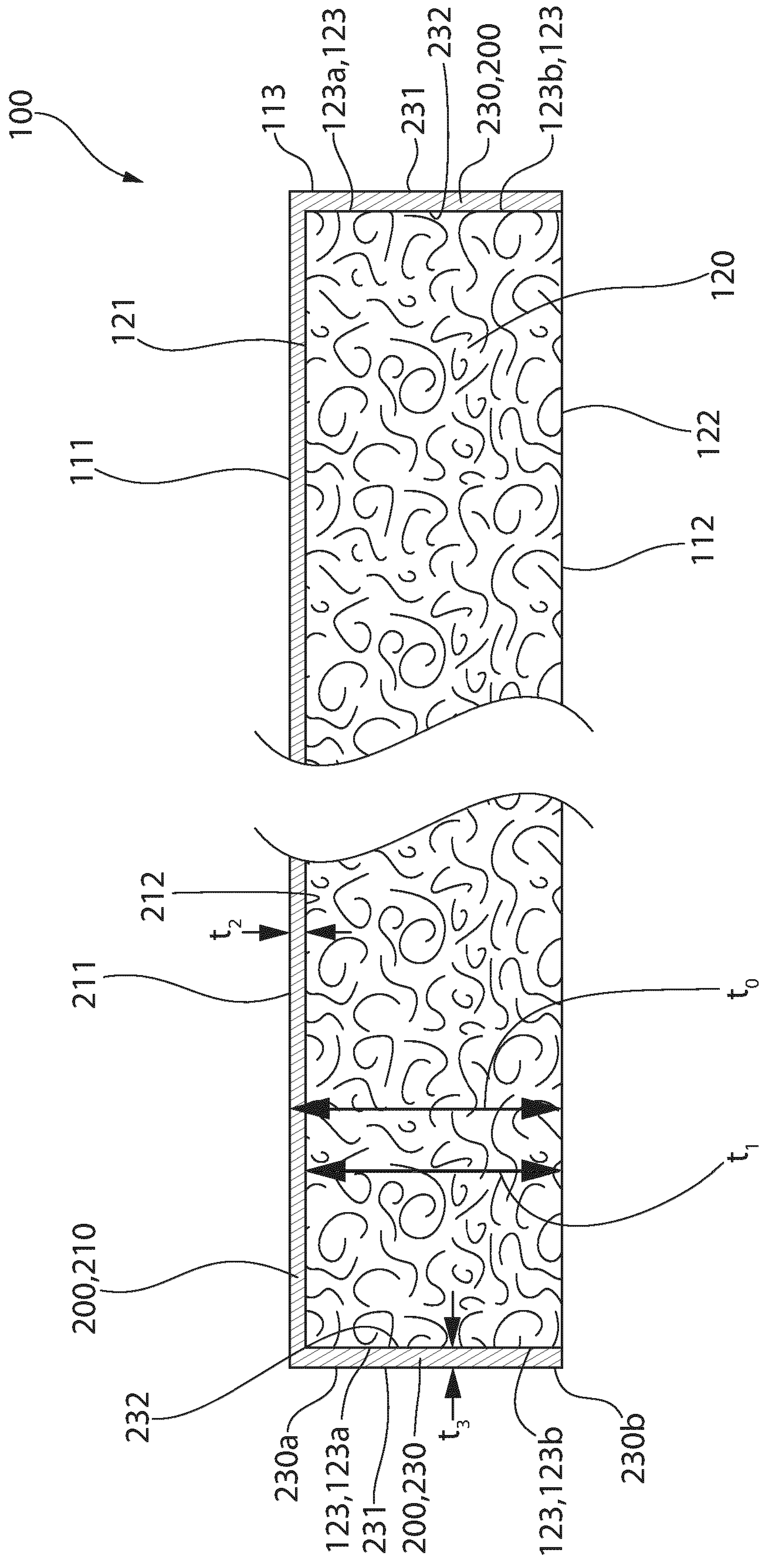
100
113
123a,123
231
232
230,200
123b,123
121
120
111
122
112
212
211
$t_2$
$t_0$
$t_1$
200,210
232
230a
123,123a
231
200,230
$t_3$
123,123b
230b

FIG. 2

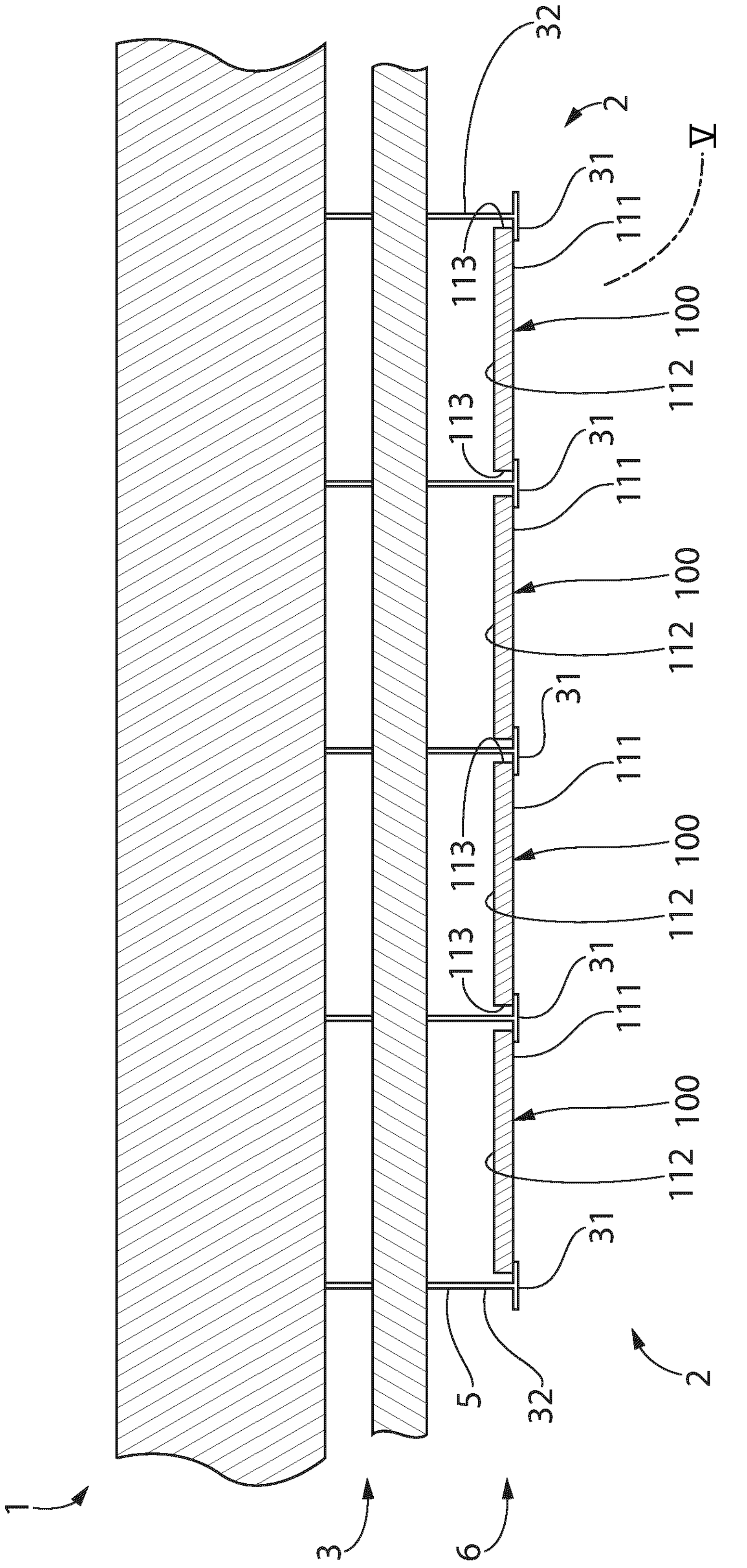
32
2
V
31
111
113
100
112
31
111
113
100
112
31
111
113
100
112
113
31
111
100
112
31
5
32
2
1
3
6

FIG. 3

Europäisches Patentamt
European Patent Office
Office européen des brevets

# EUROPEAN SEARCH REPORT

Application Number
EP 24 22 1569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 353 792 A (UNIV CENTRAL SOUTH) 18 November 2022 (2022-11-18) * paragraphs [0029] - [0039]; example 2 * ----- | 1-15 | INV. A01N55/08 A01N57/12 A01N59/16 E04H9/16 |
| A | US 2015/040796 A1 (HUGHES JOHN ERNEST [US] ET AL) 12 February 2015 (2015-02-12) * paragraphs [0065], [0087], [0093], [0098] - [0099], [0112] - [0116], [0129] - [0131]; examples 10-12; table 3 * ----- | 1-15 | |
| A | CN 105 860 742 B (HUNAN HYSUN FIRE TECH CO LTD) 9 March 2018 (2018-03-09) * paragraphs [0050] - [0058], [0068] - [0076]; examples 2,4 * ----- | 1-15 | |
| A | CN 111 205 059 A (HENAN ZHONGBAI FIREPROOF COATING TECH CO LTD) 29 May 2020 (2020-05-29) * paragraphs [0118] - [0125]; example 11 * ----- | 1-15 | |
| | | | TECHNICAL FIELDS SEARCHED (IPC) |
| | | | E04H C09G A01N C09D |

The present search report has been drawn up for all claims

1

| Place of search | Date of completion of the search | Examiner |
|---|---|---|
| Munich | 9 April 2025 | Sawicki, Marcin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 22 1569

This annex lists the patent family members relating to the patent documents cited in the above-mentioned European search report. The members are as contained in the European Patent Office EDP file on
The European Patent Office is in no way liable for these particulars which are merely given for the purpose of information.

09-04-2025

| Patent document cited in search report | | Publication date | Patent family member(s) | | Publication date |
|---|---|---|---|---|---|
| CN 115353792 | A | 18-11-2022 | NONE | | |
| US 2015040796 | A1 | 12-02-2015 | BR 112014017783 | A2 | 20-06-2017 |
| | | | CA 2862427 | A1 | 08-08-2013 |
| | | | CN 104080952 | A | 01-10-2014 |
| | | | EP 2809828 | A1 | 10-12-2014 |
| | | | US 2015040796 | A1 | 12-02-2015 |
| | | | WO 2013116191 | A1 | 08-08-2013 |
| CN 105860742 | B | 09-03-2018 | NONE | | |
| CN 111205059 | A | 29-05-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 63611823